# DEMANDE DE BREVET EUROPEEN

(11) **EP 1 574 371 A1**
(43) Date de publication de la demande: **14.09.2005**
(21) Numéro de dépôt: 05101258.1
(22) Date de dépôt: 18.02.2005
(51) Int. Cl.: B60J 1/20

(54) **Dipositif d'occultation à épaisseur variable pour véhicule automobile, et véhicule correspondant**

(30) Priorité: 18.02.2004 FR 0401644
(71) Demandeur: WAGON SAS, 79300 Bressuire (FR)
(72) Inventeur: JOLIVET, David, 79300, BRESSUIRE (FR)
(74) Mandataire: Bioret, Ludovic

(57) **Abrégé**

Dispositif d'occultation (10) pour un véhicule automobile, mobile entre au moins deux positions, une position repliée et une position déployée.

Selon l'invention, un tel dispositif d'occultation comprend un rideau d'occultation (10) réalisé dans un matériau souple présentant une épaisseur variable en fonction de la contrainte qui lui est appliquée, ledit matériau étant choisi de façon que, dans ladite position déployée, ledit rideau soit maintenu dans une forme prédéterminée.

Selon l'invention, le rideau d'occultation (10) présente en outre une première épaisseur en position déployée et une seconde épaisseur, inférieure à la première épaisseur, en position repliée.

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la force de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On comprend qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement non plane, tels que le sont par exemple les pavillons de véhicules actuels ou futurs.

En effet, si l'on développait horizontalement un store dont les dimensions pourraient être approximativement de 1,5 m en longueur, et de 1 m en largeur, pour occulter un pavillon vitré, la toile "pocherait", c'est-à-dire que ses bords latéraux se rapprocheraient légèrement l'un de l'autre, ce qui provoquerait un creux au centre de la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

Une technique connue de l'art antérieur propose l'utilisation de baleines en plastique ou en métal qui maintiennent la toile d'occultation dans la position déployée souhaitée. Selon une technique connue, les baleines sont logées dans la toile en les glissant à l'intérieur de fourreaux constitués chacun par une pièce de tissu rapportée sur la toile d'occultation et solidarisée par exemple par soudure à celle-ci.

Un des inconvénients de cette technique réside dans le fait que l'encombrement d'un tel dispositif d'occultation est relativement important, notamment lorsque celui-ci est en position repliée. Une solution à ce problème a été décrite dans le document publié sous le numéro FR 2805495 déposé au même nom que la présente demande. Selon cette technique en effet, les baleines sont désolidarisées de la toile d'occultation lorsque cette dernière est repliée, un système permettant de coupler les baleines à la toile au fur et à mesure de son déploiement. Cette technique permet effectivement de réduire l'encombrement de la toile d'occultation, mais les baleines, stockées à part, restent encombrantes. Ainsi, selon les techniques connues de l'art antérieur, aucune ne présente de solution satisfaisante quant au problème d'encombrement.

Un autre inconvénient de ces techniques réside dans le fait qu'elles sont complexes et coûteuses à mettre en oeuvre. En effet, dans le cas des dispositifs d'occultation présentant des baleines glissées dans des fourreaux, leur procédé de fabrication selon lequel des pièces de tissu sont rapportées et soudées sur la toile d'occultation et les baleines ensuite glissées à l'intérieur est long et coûteux à mettre en oeuvre. Dans le cas de dispositifs comprenant des baleines se désolidarisant de la toile d'occultation, ceux-ci présentent un système de rail de guidage et des baleines spécifiques présentant un élément d'accrochage. Ces dispositifs sont donc complexes et coûteux à fabriquer et à monter.

Encore un autre inconvénient de ces techniques réside dans leur caractère inesthétique. En effet, dans le cas où les baleines sont désolidarisées de la toile d'occultation, celles-ci restent visibles dans l'habitacle de la voiture ou nécessite un logement spécifique. Dans le cas où les baleines sont glissées dans les fourreaux prévus à cet effet, la toile risque d'être « marquée » lors de l'enroulement à cause de la présence des baleines rigides.

L'invention a notamment pour objectif de pallier ces différents inconvénients de l'état de l'art.

Plus précisément, l'invention a pour objectif de fournir un dispositif d'occultation pour véhicule automobile, et par exemple pour le pavillon de ce dernier (ou plus généralement sur toute surface importante), dont l'encombrement soit le plus réduit possible, notamment lorsqu'il est replié, afm qu'il puisse être aisément monté dans le véhicule.

Un autre objectif de l'invention est de fournir un dispositif d'occultation qui soit le plus léger possible.

Encore un autre objectif de l'invention est de proposer un procédé de fabrication et de montage d'un tel dispositif d'occultation qui soit simple et peu coûteux à mettre en oeuvre.

Un autre objectif de l'invention est de fournir un tel dispositif d'occultation qui soit efficace et qui présente un aspect visuel de bonne qualité, lorsqu'il est déployé.

Ces objectifs, ainsi que d'autres qui apparaîtront par la suite, sont atteints à l'aide d'un dispositif d'occultation pour un véhicule automobile, mobile entre au moins deux positions, une position repliée et une position déployée.

Selon l'invention, un tel dispositif d'occultation comprend un rideau d'occultation réalisé dans un matériau souple présentant une épaisseur variable en fonction de la contrainte qui lui est appliquée, ledit matériau étant choisi de façon que, dans ladite position déployée, ledit rideau soit maintenu dans une forme prédéterminée.

Selon l'invention, le rideau d'occultation présente en outre une première épaisseur en position déployée et une seconde épaisseur, inférieure à la première épaisseur, en position repliée.

Ainsi, l'invention repose sur une approche tout à fait nouvelle et inventive consistant à réaliser le rideau d'occultation dans un matériau souple dont l'épaisseur est plus faible lors qu'il est soumis à une contrainte, de façon notamment que le dispositif présente un encombrement réduit lorsque celui-ci est en position repliée.

En position déployée, en revanche, le rideau présente une épaisseur plus importante, celui-ci étant affranchi de cette contrainte, et retrouve sa forme d'origine.

De plus, le procédé de fabrication et le montage du dispositif sont plus simples et moins coûteux à mettre en oeuvre que ceux prévus dans les techniques de l'art antérieur.

L'invention permet ainsi d'obtenir une solution particulièrement adaptée à l'occultation de surfaces de grandes dimensions d'un véhicule automobile. Il peut notamment s'agir d'un pavillon intégralement ou en grande partie vitré, ou de la vitre arrière du véhicule. Le dispositif proposé par l'invention peut également servir de cache-bagages par exemple.

Selon une première approche de l'invention, le rideau d'occultation présente une épaisseur sensiblement uniforme dans la position déployée.

Selon une seconde approche de l'invention, le rideau d'occultation comprend au moins deux zones ayant des épaisseurs différentes dans la position déployée.

De façon avantageuse, les zones d'épaisseurs différentes sont des zones longitudinales présentant une première et une deuxième épaisseur prédéterminées. Celles-ci peuvent, par exemple, s'étendre perpendiculairement à l'axe de déploiement du rideau.

Préférentiellement, les zones longitudinales de première épaisseur prédéterminée et les zones longitudinales de seconde épaisseur prédéterminée s'alternent, notamment de façon régulière, et sont reliées par des zones d'épaisseur transitoire.

Ainsi, les zones d'épaisseur supérieure peuvent avoir une fonction similaire à celle de baleines et permettent le maintien du rideau d'occultation dans la forme prédéterminée souhaitée en position déployée.

Avantageusement, les zones longitudinales d'épaisseur supérieure sont suffisamment espacées les unes des autres pour, lors du repliement, s'aplatir indépendamment les unes des autres, de façon qu'en position repliée, l'encombrement du dispositif soit minimal.

Bien sûr, la même approche peut être appliquée à un quadrillage qui serait formé par les zones d'épaisseur supérieure, ou plus généralement à toute forme et répartition quelconques qui, pour le matériau choisi, permettent d'assurer le maintien du rideau d'occultation lorsque celui-ci est en position déployée.

Par ailleurs, il sera possible de prévoir un rideau d'occultation présentant un galbe particulier lorsque celui-ci est dans la position déployée, de façon à s'adapter, par exemple, à l'occultation d'un pavillon de véhicule incurvé ou galbé.

De façon avantageuse, le rideau d'occultation est réalisé dans un matériau souple compressible, comme par exemple les mousses à cellules ouvertes.

Préférentiellement, le matériau utilisé pourra être choisi parmi le polyuréthanne, le polypropylène et le polystyrène. L'utilisation de ces matériaux permet de réduire le poids et, lors de l'application d'une contrainte, notamment lors du repliement et dans la position repliée du dispositif d'occultation, de réduire au maximum son encombrement. En position déployée en revanche, le rideau retrouve sa forme d'origine.

Selon un autre mode de réalisation avantageux, le rideau d'occultation est réalisé dans un matériau souple et incompressible (ou faiblement compressible), tout en restant bien sûr déformable.

De façon préférée, pourront être utilisés le caoutchouc, le TPE (Thermo Plastique Elastomère) ou l'EPDM (Ethylène Propylène Diène Monomère). Ces matériaux sont déformables sous la contrainte et permettent donc également d'obtenir un encombrement minimal du dispositif d'occultation en position repliée.

De façon avantageuse, le rideau d'occultation est réalisé selon l'une des techniques suivantes :
- moulage ;
- tissage ;
- tricotage en trois dimensions ;
- soufflage-extrusion ;
- assemblage de deux couches parallèles à l'aide d'éléments mobiles entre les couches.

Ces différentes techniques de réalisation permettent, notamment dans le cas du moulage, du tissage, du tricotage en trois dimensions, et du soufflage-extrusion, une simplification et un coût moindre, non seulement du procédé de fabrication, mais également du montage et du réglage du rideau d'occultation.

Préférentiellement, le rideau d'occultation est monté sur un tube enrouleur et le dispositif comprend des moyens pour comprimer le rideau d'occultation avant l'enroulement.

L'invention telle que présentée concerne également tout véhicule automobile comprenant un tel dispositif d'occultation.

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1 présente un premier mode de réalisation de l'invention illustrant une coupe transversale d'un dispositif d'occultation comprenant un rideau d'occultation d'épaisseur uniforme ;
- la figure 2 présente une variante du mode de réalisation illustré par la figure 1, selon la même coupe, dans laquelle le rideau d'occultation comprend des éléments mobiles ;
- la figure 3 présente une variante du mode de réalisation illustré par la figure 2, selon la même coupe, dans laquelle le rideau d'occultation comprend des éléments articulés ;
- la figure 4 présente un autre mode de réalisation, illustrant une coupe transversale d'un dispositif d'occultation comprenant au moins deux zones d'épaisseurs différentes.

Le principe général de l'invention repose donc sur la mise en oeuvre d'un dispositif d'occultation mobile entre au moins deux positions, une position repliée et une position déployée, destiné à occulter une surface importante d'un véhicule. Il peut notamment s'agir d'un pavillon intégralement ou en grande partie vitré. L'invention peut également être utilisée pour une vitre arrière de véhicule, un cache-bagages, etc.

Selon l'invention, le rideau d'occultation est réalisé dans une matière souple et déformable sous la contrainte, choisie de façon qu'en position déployée il soit maintenu dans la position souhaitée, sans « pocher » ni se déformer.

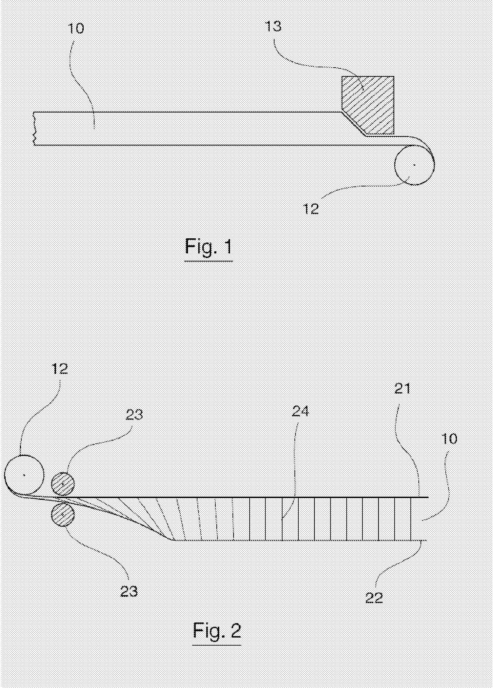

En référence à la figure 1, le dispositif comprend un rideau -ou élément- d'occultation 10 monté sur un tube enrouleur 12. Le rideau d'occultation 10 est réalisé dans une même pièce de matériau souple et, tel qu'illustré selon ce mode de réalisation, il est plan et d'épaisseur uniforme.

Les matériaux souples utilisés peuvent être des matériaux compressibles comme par exemple des mousses à cellules ouvertes comme les matériaux expansés de type polyuréthanne, polypropylène, polystyrène ou autres. Ces matériaux expansés peuvent également jouer le rôle d'isolant acoustique et/ou thermique du fait de l'air présent à l'intérieur, et leur utilisation permet l'obtention d'un dispositif d'occultation très léger et présentant un encombrement relativement faible en position repliée.

D'autres matériaux non (ou faiblement) compressibles mais déformables sous application d'une contrainte peuvent également être envisagés. Ces matériaux sont par exemple le caoutchouc, le TPE (Thermo Plastique Elastomère) ou l'EPDM (Ethylène Propylène Diène Monomère).

Cette variante permet également un faible encombrement du dispositif lorsque l'élément d'occultation est en position repliée, mais assure également une durée de vie plus longue de celui-ci. En effet, lorsque qu'une matière compressible est utilisée, celle-ci risque éventuellement de voir sa compressibilité diminuer avec le temps et l'usage.

Lors de l'enroulement, l'ensemble du rideau d'occultation 10 se comprime, et lorsqu'il est déroulé, en position déployée pour l'occultation du pavillon du véhicule par exemple, le rideau d'occultation retrouve sa forme et son épaisseur d'origine.

Des moyens de compression assurant la compression lors de l'enroulement, ou juste avant, peuvent être prévus, par exemple sous la forme d'un guide fixe (13, figure 1) ou d'un rouleau ou de plusieurs rouleaux (23, figure 2).

Le rideau d'occultation pourra être fabriqué par moulage ou par soufflage-extrusion. Il peut également être réalisé en fibres textiles et fabriqué par tissage ou par tricotage en trois dimensions. Les textiles tridimensionnels -ou préformés- sont constitués de fibres discontinues ou continues disposées dans les trois directions de l'espace et associées entre-elles par des procédés mécaniques dans les différentes directions de l'espace.

Ce mode de réalisation permet de simplifier le processus de fabrication du dispositif En effet, l'ensemble du rideau d'occultation étant réalisé d'une seule pièce, une seule matière première est nécessaire, et les procédé de fabrication sont simples et peu coûteux à mettre en oeuvre.

Les étapes de positionnement et de solidarisation de baleines nécessaires dans les différentes techniques de l'art antérieur n'ont plus à être mises en oeuvre.

D'autre part, ce mode de réalisation et plus généralement l'invention permet également de simplifier le montage et le réglage du dispositif dans le véhicule.

Typiquement, en fonction du matériau utilisé, l'épaisseur du rideau d'occultation pourra varier entre 0,6 mm et 2 mm en position déployée, pour obtenir après enroulement une dimension du dispositif de l'ordre de 50 mm de diamètre dans le cas de l'occultation d'un pavillon de 1,5 m de longueur et 1 m de largeur.

D'autres formes selon lesquelles le rideau d'occultation présente une épaisseur uniforme peuvent être envisagées, comme un plan incurvé, ou une section sinusoïdale ou autre en fonction de leur efficacité par rapport au(x) galbe(s) souhaité(s).

La figure 2 présente selon le même mode de réalisation que la figure un rideau d'occultation 10 d'épaisseur uniforme comprenant deux couches parallèles 21 et 22 (réalisées par exemple en textile ou dans une matière plastique), reliées entre elles par des éléments de liaison 24. Ceux-ci s'étendent perpendiculairement à l'axe de déploiement du rideau d'occultation 10 et sont dans une position sensiblement verticale (c'est-à-dire perpendiculaire aux couches 21 et 22) lorsque le rideau d'occultation est en position déployée.

Les éléments de liaison 24 peuvent être répartis de façon régulière sur la longueur du rideau d'occultation 10 et pourront par exemple être réalisés en métal ou en plastique ou dans une matière souple.

Lors de l'enroulement autour d'un tube d'enroulement 12, les rouleaux -ou galets- de compression 23, assurent la compression du rideau d'occultation 10 de façon à réduire son épaisseur et permettre un encombrement réduit du dispositif lorsque celui-ci est en position repliée.

Les éléments de liaison 24 s'inclinent lors de la compression pour être sensiblement parallèles aux couches 21 et 22 lors de l'enroulement.

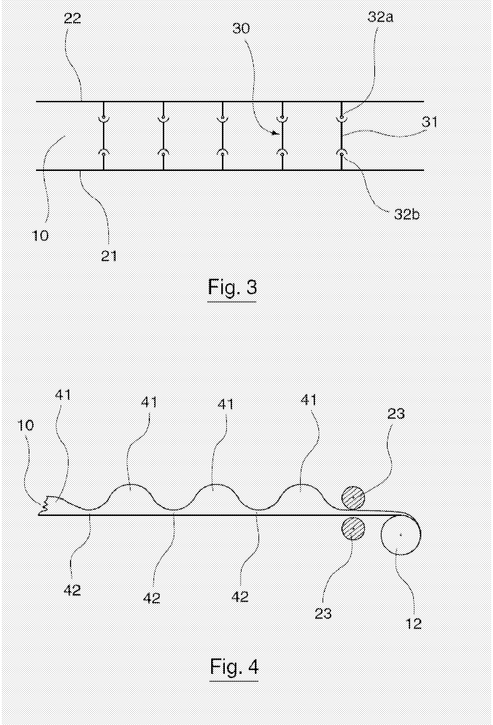

La figure 3 illustre une variante du mode de réalisation selon la figure 2, dans laquelle le rideau d'occultation 10 comprend également deux couches parallèles 21 et 22 reliées entre-elles par des éléments de liaison 30 s'étendant perpendiculairement aux couches 21, 22 lorsque le rideau d'occultation est en position déployée. Les éléments de liaison 30 sont composés de deux parties fixes 32a et 32b, chacune étant solidaire d'une des couches, et d'une partie mobile 31, joignant les deux parties fixes, et articulée au niveau des jonctions.

Lors de l'enroulement du store et de la compression du rideau d'occultation 10, les parties mobiles 31 de chaque élément de liaison 30 vont ainsi s'incliner pour se placer sensiblement parallèles aux couches 21, 22 (non illustré).

D'autres variantes pourront bien sûr être envisagées, comme par exemple des ressorts joignant deux couches, répartis de façon homogène à l'intérieur le rideau d'occultation, de façon à permettre la réduction de l'épaisseur du rideau en position repliée, et à celui-ci de revenir dans sa forme d'origine lorsqu'il est déployé.

La figure 4 présente un autre mode de réalisation selon lequel le rideau d'occultation 10 comprend des zones longitudinales d'épaisseurs différentes. Il comprend notamment des zones d'épaisseur plus faible 42 réduites à une fine couche de matière souple alternant avec des zones longitudinales plus épaisses 41 dont la fonction est similaire à celle de baleines et permettent le maintien du rideau d'occultation dans une forme prédéterminée en position déployée.

Ce mode de réalisation permet un encombrement plus faible du rideau d'occultation en position repliée. En effet, la section transversale en chapeau de gendarme des zones plus épaisses facilitant leur compression lors de l'enroulement. D'autres formes (triangulaires, incurvées) sont également envisageables.

De façon préférée, les zones longitudinales plus épaisses 41 sont suffisamment espacées pour s'aplatir indépendamment les unes des autres au fur et à mesure de la compression par les rouleaux de compression 23 préalablement à l'enroulement.

L'épaisseur, la largeur, la forme et l'espacement des zones longitudinales plus épaisses 41 sont choisis en fonction des caractéristiques du matériau dans lequel est réalisé le rideau d'occultation et de ses dimensions.

Classiquement, dans le cas d'un pavillon, on prévoira pour les zones les plus épaisses 41, une épaisseur pouvant varier entre 2 mm et 5 mm, et pour les zones les plus fines 42, une épaisseur de l'ordre de 0,6 mm, et un espacement entre les zones longitudinales les plus épaisses 41 compris entre 15 et 25 cm.

Les différents procédés de fabrication cités ci-avant restent aisément applicables et peu coûteux à mettre en oeuvre.

D'autre part, la forme du rideau d'occultation et les variations d'épaisseur peuvent être optimisées en fonction du maintien des rideaux en position déployée, de leur encombrement en position repliée mais également de façon à permettre leur empilement face à face deux à deux, ce qui permet un gain de place lors de leur stockage.

D'autres répartitions des zones de différentes épaisseurs pourront également être envisagées, ainsi que plus deux épaisseurs différentes en fonction de leur efficacité par rapport au galbe souhaité pour le rideau d'occultation

D'une façon générale, dans les différents modes de réalisation décrits, le rideau d'occultation pourra présenter des prolongements adaptés le long de ses bords latéraux de façon que ceux-ci soient guidés et/ou maintenus dans des rails prévus à cet effet.

Un revêtement pourra être prévu et rapporté sur l'une et/ou l'autre des faces du rideau d'occultation, notamment un Jersey (marque déposée) sur la face visible pour accorder le dispositif à la garniture intérieure du véhicule ou dans le cas de l'occultation du pavillon ou de la vitre arrière par exemple sur la face contre la vitre pourra être rapporté un revêtement atténuant, absorbant ou réfléchissant la lumière.

## Revendications

1. Dispositif d'occultation pour un véhicule automobile, mobile entre au moins deux positions, une position repliée et une position déployée,
**caractérisé en ce qu'**il comprend un rideau d'occultation réalisé dans un matériau souple présentant une épaisseur variable en fonction de la contrainte qui lui est appliquée, ledit matériau étant choisi de façon que, dans ladite position déployée, ledit rideau soit maintenu dans une forme prédéterminée, et
**en ce que** ledit rideau d'occultation présente une première épaisseur en position déployée et une seconde épaisseur, inférieure à la première épaisseur, en position repliée.

2. Dispositif d'occultation selon la revendication 1, **caractérisé en ce que** ledit rideau d'occultation présente une épaisseur sensiblement uniforme dans ladite position déployée.

3. Dispositif d'occultation selon la revendication 1, **caractérisé en ce que** ledit rideau d'occultation comprend au moins deux zones ayant des épaisseurs différentes dans ladite position déployée.

4. Dispositif d'occultation selon la revendication 3, **caractérisé en ce que** ledit rideau d'occultation comprend des zones longitudinales de première épaisseur prédéterminée, et des zones longitudinales de seconde épaisseur prédéterminée.

5. Dispositif d'occultation la revendication 4, **caractérisé en ce que** lesdites zones longitudinales de première épaisseur prédéterminée et lesdites zones longitudinales de seconde épaisseur prédéterminée sont alternées.

6. Dispositif d'occultation selon la revendication 5, **caractérisé en ce que** ladite alternance est régulière.

7. Dispositif d'occultation selon l'une quelconque des revendications 4 à 6, **caractérisé en ce que** lesdites zones longitudinales de première épaisseur prédéterminée et lesdites zones longitudinales de deuxième épaisseur prédéterminées sont reliées par des zones d'épaisseur transitoire.

8. Dispositif d'occultation selon l'une quelconque des revendications 1 à 7, **caractérisé en ce que** ledit matériau est compressible.

9. Dispositif d'occultation selon la revendication 8, **caractérisé en ce que** ledit matériau compressible est de type mousse à cellules ouvertes.

10. Dispositif d'occultation selon l'une quelconque des revendications 8 et 9, **caractérisé en ce que** ledit matériau compressible est choisi parmi le polyuréthanne, le polypropylène et le polystyrène.

11. Dispositif d'occultation selon l'une quelconque des revendications 1 à 7, **caractérisé en ce que** ledit matériau est incompressible.

12. Dispositif d'occultation selon la revendication 11, **caractérisé en ce que** ledit matériau incompressible est choisi parmi le choisi parmi le caoutchouc, le TPE (Thermo Plastique Elastomère) et l'EPDM (Ethylène Propylène Diène Monomère).

13. Dispositif d'occultation selon l'une quelconque des revendications 1 à 12, **caractérisé en ce que** ledit rideau d'occultation est réalisé selon l'une des techniques suivantes :
- moulage ;
- tissage ;
- tricotage en trois dimensions ;
- soufflage-extrusion ;
- assemblage de deux couches parallèles à l'aide d'éléments mobiles entre lesdites couches.

14. Dispositif d'occultation selon l'une quelconque des revendications 1 à 13, **caractérisé en ce que** ledit rideau d'occultation est monté sur un tube enrouleur.

15. Dispositif d'occultation selon la revendication 14, **caractérisé en ce qu'**il comprend des moyens pour comprimer ledit rideau d'occultation avant l'enroulement.

16. Dispositif d'occultation selon l'une quelconque des revendications 14 et 15 et selon l'une quelconque des revendications 4 à 6, **caractérisé en ce que**, ladite première épaisseur étant supérieure à ladites seconde épaisseur, lesdites zones longitudinales de première épaisseur sont suffisamment éloignées les unes des autres par lesdites zones longitudinales de deuxième épaisseur pour s'aplatir indépendamment les unes des autres lors de l'enroulement.

17. Dispositif d'occultation selon l'une quelconque des revendications 1 à 16, **caractérisé en ce que** le rideau d'occultation est destiné à occulter un pavillon ou une partie d'un pavillon.

18. Véhicule automobile, **caractérisé en ce qu'**il comprend au moins un dispositif d'occultation mobile entre au moins deux positions, une position repliée et une position déployée, comprenant un rideau d'occultation réalisé dans un matériau souple présentant une épaisseur variable en fonction de la contrainte qui lui est appliquée, ledit matériau étant choisi de façon que dans ladite position déployée ledit rideau soit maintenu dans une forme prédéterminée.

19. Véhicule automobile selon la revendication 18, **caractérisé en ce que** ledit dispositif d'occultation s'étend au moins partiellement en regard du pavillon.
